# EUROPEAN PATENT SPECIFICATION

(11) **EP 3 698 636 B1**
(45) Date of publication and mention of the grant of the patent: **08.05.2024**
(21) Application number: 20156575.1
(22) Date of filing: 11.02.2020
(51) Int. Cl.: A21D 2/08, A21D 6/00, A21D 8/02, A21D 10/00, A21D 13/60, A21D 2/26, A21D 8/04, A21D 13/32, A23G 9/22

(54) **METHOD FOR USING ICE-CREAM BY MIXING THE ICE-CREAM WITH FLOUR AND YEAST, AND PRODUCING A BAKERY PRODUCT**
VERFAHREN ZUR VERWENDUNG VON EISCREME DURCH MISCHEN DES EISES MIT MEHL UND HEFE, UND HERSTELLUNG EINER BACKWARE
PROCÉDÉ POUR UTILISER DE CRÈME GLACÉE EN MÉLANGEANT LA CRÈME GLACÉE AVEC DE LA FARINE ET DE LA LEVURE, ET PRODUCTION DES PRODUITS DE BOULANGERIE

(30) Priority: 14.02.2019 IT 201900002179
(43) Date of publication of application: 26.08.2020
(73) Proprietor: Racca Studio S.r.l.s., 18100 Imperia (IT)
(72) Inventor: RACCA, Alessandro, I-18100 IMPERIA (IT)
(74) Representative: Mola, Edoardo

(56) References cited:
- DATABASE GNPD [Online] MINTEL; 27 November 2014 (2014-11-27), anonymous: "Chocolate Croissant", XP055629451, retrieved from www.gnpd.com Database accession no. 2824155
- CAMPOS D T ET AL: "MIXING WHEAT FLOUR AND ICE TO FORM UNDEVELOPED DOUGH", CEREAL CHEMISTRY, AACC INTERNATIONAL INC, US, vol. 73, no. 1, January 1996 (1996-01), pages 105-107, XP009062704, ISSN: 0009-0352

## Description

The present invention concerns a mixture for leavened bakery products, such as croissants or similar pastry products, in which the liquid component of the mixture partially or totally consists of ice-cream or ice-cream blend.

This ensures total utilization of the ice-cream, obtaining innovative bakery products which have the flavour of the ice-cream (chocolate, vanilla etc.), while maintaining the fragrance, fluffiness, crispness and organoleptic properties of the product in addition to performing better in terms of proofing, appetisability and conservation.

It is known that in ice-cream parlours, at the end of the day, there is a considerable amount of leftover ice-cream. These leftovers have limited conservation times, and are often thrown away. The aim of the present invention is therefore to use these leftovers as a liquid component in a flour and yeast mixture to create bakery products such as croissants, brioches and/or similar.

The invention not only ensures utilization of this leftover ice-cream, which would usually be discarded, but bakery products are obtained having healthy, totally natural and appetising flavours which are completely new due to the ice-cream flavours used; furthermore, this method increases the customer footfall in the ice-cream parlour since customers have many different products to choose from.

A further advantage of the process according to the present invention consists in the fact that it controls the temperature of the mixture which, during the mechanical processing, is increased by the friction produced by the mixers. The gluten formation is also controlled due to the low temperature of the mixture, so that the starch is not able to hydrate completely and the protein part prevails, assisted by the hydrocolloids naturally occurring in the ice-cream, and therefore also in the mixture.

Using frozen water in dough-making is known in the art (see: Campos 0 T et al: " Mixing wheat flour and ice to form undeveloped dough", CEREAL CHEMISTRY, AACC INTERNATIONAL INC, US, vol. 73, no. 1, January 1996, pages 105-107).

Some practical examples of recipes according to the invention are given below.

### EXAMPLE OF BASIC MIXTURE:

### BASIC MIXTURE FOR NATURAL YEAST CROISSANTS

| | | | | | |
|---|---|---|---|---|---|
| Sourdough | | g | 400 | | |
| Croissant flour | 340-360W | | (strenght) | g | 1600 |
| Fresh butter 82% fat | | g | 150 | | |
| Sugar | | g | 300 | | |
| Eggs | | g | 250 | | |
| Powdered low-fat milk | | g | 50 | | |
| Salt | | g | 25 | | |
| Malt | | g | 2 | | |
| Water | | g | 520 | | |
| Powdered Madagascar vanilla | | g | 8 | | |
| Total | | g | 3300 | | |

### EXAMPLE 1

Approximately 1250 grams of cream flavoured ice-cream are added to a mixture of sourdough, croissant flour, salt and malt as above, replacing the butter, sugar, eggs, powdered low-fat milk, water and vanilla.

| | | | | | |
|---|---|---|---|---|---|
| Sourdough | | | | g | 400 |
| Croissant flour | 340-360W (strenght) | g | 1600 | | |
| VANILLA ICE-CREAM | | | | g | 1250 |

Furthermore, thanks to the addition of the ice-cream, the mixture is enriched with carob seed flour, guar gum and tara gum which will improve the performance of the mixture.

Mix for 20 minutes until fully blended.

Final temperature of the mixture 20° - 22°C.

Leave to rest at ambient temperature for at least 1.5 hours, keep in the refrigerator at +4°C for 12 hours.

Sheet and divide into portions as required with 1000 g of butter, performing three 3-folds.

Place in a retarder-proofer for at least 12 hours at 26°C.

Bake at 200°C in a static oven for 14-16 minutes or fan oven at 180°C for 12-13 minutes.

### EXAMPLE 2

### CHOCOLATE CROISSANTS (NO EGGS)

| | | |
|---|---|---|
| Wholemeal croissant flour 340W (strength) | g | 1500 |
| Milk chocolate ice-cream | g | 800 |
| Salt | g | 20 |
| Powdered brewer's yeast | g | 10 |
| Total | g | 2330 |

Mix for 20 minutes until fully blended.

Final temperature of the mixture 20° - 22°C.

Leave to rest at ambient temperature for at least 2 hours, keep in the refrigerator at +4°C.

Sheet and divide into portions as required with 500 g of butter, performing two 4-folds.

Place in a retarder-proofer for at least 12 hours at 26°C.

Bake at 200°C in a static oven for 14-16 minutes or a fan oven at 180°C.

### EXAMPLE 3

### PISTACHIO DOUGHNUTS

| | | |
|---|---|---|
| Croissant flour | g | 1500 |
| Pistachio ice-cream | g | 1000 |
| Salt | g | 20 |
| Powdered brewer's yeast | g | 10 |
| Total | g | 2530 |

Mix for 20 minutes until fully blended.

Final temperature of the mixture 20° - 22°C.

Leave to rest at ambient temperature for at least 2 hours, keep in the refrigerator at +4°C.

Divide into portions as required and fry in olive oil at 175-180°C

Fill with confectioner's custard or spreadable pistachio cream.

The balance of the recipe is obtained as follows: weight of the ice-cream - total ice-cream solids = weight of the water contained in the ice-cream from which 15% is subtracted (mean % of the water bound with solid material of the ice-cream mixture).

The above value is multiplied x 2 and the quantity of flour to be used is obtained.

Other products are added, if necessary, to the flour and the ice-cream according to the recipe/finished product required.

Naturally the present invention is not limited to the above recipe examples, but comprises all possible variations to a mixture of ice-cream with flour and yeast, as claimed in the attached claims.

## Claims

1. A method for using leftover ice-cream with the production of bakery products such as croissants, brioches, doughnuts or similar **characterized by** the following operative steps:
• formation of a sourdough, croissant flour, salt and malt, ice-cream mixture by addition of 1,600 grams of croissant flour 340-360W (strength) and 1,250 grams of ice-cream to 400 grams of sourdough, 2 grams of malt and 25 grams of salt;
• mixing for 20 minutes until fully blended, bringing the final temperature of the mixture to 20-22 degrees C;
• leaving to rest at ambient temperature for at least 1.5 hours, keeping in the refrigerator at plus 4 degrees C for 12 hours;
• sheeting and portioning as required with 1,000 grams of butter;
• placing in a retarder-proofer for at least 12 hours at 26 degrees C;
• baking at 200 degrees C in a static oven for 14-16 minutes or fan oven at 180 degrees C for 12-13 minutes.

2. The method according to claim 1, **characterized in that** the addition of ice-cream to the mixture provides wholly or partly the needed quantity of sugar, milk and eggs.

3. The method according to claim 1, **characterized in that** due to the addition of ice-cream to the mixture, the latter is enriched with thickeners and emulsifiers such as carob seed flour, guar gum and tara gum.

4. The method according to any one of the preceding claims from 1 to 3, **characterized in that** due to the low temperature of the ice-cream present in the mixture, the temperature of the mixture is kept under control.

5. The method according to any of the preceding claims **characterized in that** the bakery product is flavoured with the flavour of the ice-cream used in the mixture.

6. A method for producing a chocolate croissant **characterized by** the following operative steps:
• formation of a sourdough of:
| | | | |
|---|---|---|---|
| Wholemeal CROISSANT flour 340W (strength) | | g | 1500 |
| Milk chocolate ice-cream | | g | 800 |
| Salt | | g | 20 |
| Powdered brewer's yeast | | g | 10 |
| | Total | g | 2330 |
• Mixing for 20 minutes until fully blended, final temperature of the mixture 20°C - 22°C.
• Leaving to rest at ambient temperature for at least 2 hours, keep in the refrigerator at +4°C.
• Sheeting and portion as required with 500 g of butter, performing two 4-folds.
• Placing in a retarder-proofer for at least 12 hours at 26°C.
• Baking at 200°C in a static oven for 14-16 minutes or in a fan oven at 180°C.

7. A method for producing a Pistachio doughnut **characterized by** the following operative phases:
• formation of a sourdough of:
| | | | |
|---|---|---|---|
| CROISSANT flour | | g | 1500 |
| Pistachio ice-cream | | g | 1000 |
| Salt | | g | 20 |
| Powdered brewer's yeast | | g | 10 |
| | Total | g | 2530 |
• Mixing for 20 minutes until fully blended,final temperature of the mixture 20°C - 22°C.
• Leaving to rest at ambient temperature for at least 2 hours, keep in the refrigerator at +4°C.
• Portioning as required and frying in olive oil at 175-180°C
• Filling with confectioner's custard or spreadable pistachio cream.

## Patentansprüche

1. Verfahren zur Verwendung von Eisresten bei der Herstellung von Backwaren wie Croissants, Brioches, Doughnuts oder ähnlichem, **gekennzeichnet durch** die folgenden Arbeitsschritte:
• Herstellung einer Mischung aus Sauerteig, Croissantmehl, Salz und Malz und Speiseeis durch Zugabe von 1.600 Gramm Croissantmehl 340-360W (Stärke) und 1.250 Gramm Speiseeis zu 400 Gramm Sauerteig, 2 Gramm Malz und 25 Gramm Salz;
• 20 Minuten lang mischen, bis alles gut vermischt ist und die Endtemperatur der Mischung 20-22 Grad C beträgt;
• Mindestens 1,5 Stunden bei Raumtemperatur ruhen lassen, 12 Stunden im Kühlschrank bei plus 4 Grad C aufbewahren;
• Teig ausrollen und Portionieren nach Bedarf mit 1.000 Gramm Butter;
• Mindestens 12 Stunden lang bei 26 Grad Celsius in einen Gärschrank legen;
• Bei 200 Grad C im statischen Ofen 14-16 Minuten oder im Umluftofen bei 180 Grad C 12-13 Minuten backen.

2. Verfahren nach Anspruch 1, **dadurch gekennzeichnet, dass** die Zugabe von Speiseeis zu der Mischung ganz oder teilweise die benötigte Menge an Zucker, Milch und Eiern liefert.

3. Verfahren nach Anspruch 1, **dadurch gekennzeichnet, dass** durch die Zugabe von Speiseeis zu der Mischung die letzte mit Verdickungsmitteln und Emulgatoren wie Johannisbrotkernmehl, Guarkernmehl und Tarakernmehl angereichert wird.

4. Das Verfahren nach einem der vorhergehenden Ansprüche 1 bis 3, **dadurch gekennzeichnet, dass** durch die niedrige Temperatur des in der Mischung enthaltenen Speiseeises die Temperatur der Mischung unter Kontrolle gehalten wird.

5. Verfahren nach einem der vorhergehenden Ansprüche, **dadurch gekennzeichnet, dass** das Backprodukt mit dem Geschmack des in der Mischung verwendeten Speiseeises aromatisiert wird.

6. Verfahren zur Herstellung eines Schokoladencroissants, **gekennzeichnet durch** die folgenden Verfahrensschritte:
• Herstellung eines Sauerteigs aus:
| | | |
|---|---|---|
| CROISSANT-Vollkornmehl 340W (Stärke) | g | 1500 |
| Vollmilchschokoladeneis | g | 800 |
| Salz | g | 20 |
| Bierhefe in Pulverform | g | 10 |
| Insgesamt | g | 2330 |
• 20 Minuten lang mischen, bis der Teig vollständig vermischt ist, Endtemperatur der Mischung 20°C-22°C.
• Mindestens 2 Stunden bei Raumtemperatur ruhen lassen, im Kühlschrank bei +4°C aufbewahren
• Teig ausrollen und Portionieren nach Bedarf mit 500 g Butter, wobei zwei 4-fache Faltungen vorgenommen werden.
• Mindestens 12 Stunden lang bei 26°C in einen Gärschrank legen.
• Bei 200°C in einem statischen Ofen 14-16 Minuten oder in einem Umluftofen bei 180°C backen.

7. Verfahren zur Herstellung eines Pistaziendoughnut, **gekennzeichnet durch** die folgenden operativen Phasen:
• Herstellung eines Sauerteigs aus:
| | | |
|---|---|---|
| CROISSANT-Mehl | g | 1500 |
| Pistazieneis | g | 1000 |
| Salz | g | 20 |
| Bierhefe in Pulverform | g | 10 |
| Insgesamt | g | 2530 |
• 20 Minuten lang mixen, bis der Teig vollständig vermischt ist, Endtemperatur der Mischung 20°C - 22°C.
• Mindestens 2 Stunden bei Raumtemperatur ruhen lassen, im Kühlschrank bei +4°C aufbewahren.
• Portionieren nach Bedarf und Frittieren in Olivenöl bei 175-180°C.
• Bestreichen mit Konditorpudding oder streichfähiger Pistaziencreme.

## Revendications

1. Procédé pour utiliser des restes de crème glacée pour la production de produits de boulangerie tels que des croissants, brioches, beignets ou produits similaires, **caractérisé par** les étapes opérationnelles suivantes :
• former un mélange de levain, farine croissant, sel et malt, crème glacée, en additionnant 1600 grammes de farine croissant 340-360 W (force) et 1250 grammes de crème glacée à 400 grammes de levain, 2 grammes de malt et 25 grammes de sel ;
• mélanger pendant 20 minutes jusqu'à obtenir une préparation homogène, en portant la température finale du mélange à 20-22 degrés C ;
• laisser reposer à température ambiante pendant au moins 1,5 heure, conserver au réfrigérateur à +4 degrés C pendant 12 heures ;
• procéder au feuilletage et au portionnement tel que requis avec 1000 grammes de beurre ;
• placer dans une armoire de fermentation contrôlée pendant au moins 12 heures à 26 degrés C ;
• cuire à 200 degrés C dans un four statique pendant 14-16 minutes ou dans un four à chaleur tournante à 180 degrés C pendant 12-13 minutes.

2. Procédé selon la revendication 1, **caractérisé en ce que** l'ajout de crème glacée au mélange fournit entièrement ou en partie la quantité requise de sucre, de lait et d'œufs.

3. Procédé selon la revendication 1, **caractérisé en ce que** grâce à l'ajout de crème glacée au mélange, ce dernier est enrichi avec des épaississants et émulsifiants comme la farine de graines de caroube, la gomme de guar et la gomme tara.

4. Procédé selon l'une quelconque des revendications précédentes 1 à 3, **caractérisé en ce que**, en raison de la basse température de la crème glacée présente dans le mélange, la température du mélange est maintenue sous contrôle.

5. Procédé selon l'une quelconque des revendications précédentes, **caractérisé en ce que** le produit de boulangerie est aromatisé avec le goût de la crème glacée utilisée dans le mélange.

6. Procédé pour la production d'un croissant au chocolat **caractérisé par** les étapes opérationnelles suivantes :
• formation d'un levain de :
| | | |
|---|---|---|
| Farine CROISSANT complète 340 W (force) | g | 1500 |
| Crème glacée au chocolat au lait | g | 800 |
| Sel | g | 20 |
| Levure de bière en poudre | g | 10 |
| Total | g | 2330 |
• Mélanger pendant 20 minutes jusqu'à obtenir une préparation homogène, température finale du mélange 20°C - 22°C.
• Laisser reposer à température ambiante pendant au moins 2 heures, conserver au réfrigérateur à +4°C.
• Procéder au feuilletage et au portionnement tel que requis avec 500 g de beurre, réaliser deux pliages en 4.
• Placer dans une armoire de fermentation contrôlée pendant au moins 12 heures à 26°C.
• Cuire à 200°C dans un four statique pendant 14-16 minutes ou dans un four à chaleur tournante à 180°C.

7. Procédé pour la production d'un beignet à la Pistache **caractérisé par** les étapes opérationnelles suivantes :
• formation d'un levain de :
| | | |
|---|---|---|
| Farine CROISSANT | g | 1500 |
| Crème glacée à la pistache | g | 1000 |
| Sel | g | 20 |
| Levure de bière en poudre | g | 10 |
| Total | 9 | 2530 |
• Mélanger pendant 20 minutes jusqu'à obtenir une préparation homogène, température finale du mélange 20°C - 22°C.
• Laisser reposer à température ambiante pendant au moins 2 heures, conserver au réfrigérateur à +4°C.
• Procéder au portionnement tel que requis et frire dans de l'huile d'olive à 175-180°C
• Farcir avec de la crème pâtissière ou de la pâte à tartiner à la pistache.
